# EUROPÄISCHE PATENTSCHRIFT

(11) **EP 0 972 372 B1**
(45) Veröffentlichungstag und Bekanntmachung des Hinweises auf die Patenterteilung: **16.05.2001**
(21) Anmeldenummer: 98910519.2
(22) Anmeldetag: 27.03.1998
(51) Int. Cl.: H04L 7/04

(54) **TRAININGSFOLGEN MIT OPTIMIERTEN KREUZKORRELATIONSEIGENSCHAFTEN**
TRAINING SEQUENCES WITH OPTIMIZED CROSS-CORRELATION PROPERTIES
SEQUENCES D'APPRENTISSAGE A PROPRIETES DE CORRELATION CROISEE OPTIMISEES

(30) Priorität: 27.03.1997 AT 53297
(43) Veröffentlichungstag der Anmeldung: 19.01.2000
(73) Patentinhaber: Telekom Austria Aktiengesellschaft, 1011 Wien (AT)
(72) Erfinder: FUHL, Josef, A-1040 Wien (AT); BONEK, Ernst, A-1040 Wien (AT)
(74) Vertreter: Müllner, Erwin, Dr.
(86) Internationale Anmeldenummer: AT9800083
(87) Internationale Veröffentlichungsnummer: WO9844675

(56) Entgegenhaltungen:
- EP-A- 0 615 352
- D'ARIA G ET AL: "SYNCHRONIZATION TECHNIQUES AND VITERBI EQUALIZERS FOR TDMA MOBILE RADIO" CSELT TECHNICAL REPORTS, Bd. 17, Nr. 2, 1.April 1989, Seiten 125-131, XP000575030
- MOULY M ET AL: "THE GSM SYSTEM FOR MOBILE COMMUNICATIONS" 1993 , EUROPE MEDIA , LAZAY-LES-CHATEAUX XP002067675 in der Anmeldung erwähnt Kapitel 4.3.1.1.

## Beschreibung

### TECHNISCHES GEBIET

Die Erfindung betrifft neue Trainingsfolgen mit optimierter Kreuzkorrelation für die Anwendung im zellularen Mobilfunk.

### STAND DER TECHNIK

Die heute im Mobilkommunikationssystem GSM (Global System für Mobile Communications) zur Anwendung kommenden Trainingssequenzen weisen optimale Autokorrelations-, jedoch suboptimale Kreuzkorrelationseigenschaften auf. In *M. Mouly, M*.*-B*. *Pautet, "The GSM System for Mobile Communications*", *Eigenverlag der Autoren,* werden die acht für GSM spezifizierten Trainingsfolgen TSO, TS1,...,TS7 angegeben, die normgemäß eine Länge von 26 Bit haben. Die Kreuzkorrelationseigenschaften dieser Folgen waren für die bisherigen Systemverhältnisse ausreichend. Diese Trainingsfolgen sind auch in der Arbeit von G. D'ARIA et al. in CSELT TECHNICAL REPORTS, Bd. 17, Nr. 1, 1. April 1989, Seiten 125 bis 131 angegeben. In dieser Arbeit wird festgestellt, dass ein adaptiver Equalizer für GSM-Systeme unverzichtbar ist und dass die Auswertung der Korrelationseigenschaften der Trainingssequenzen großen Einfluss auf die Wirksamkeit des Algorithmus für den adaptiven Equalizer und die Auswirkung von Interferenzen durch Nachbarkanäle hat. Mit dem Aufkommen neuer Techniken, wie z.B. adaptiver Antennen, und neuer Zugriffsverfahren, wie z.B. Raummultiplex (engl. SDMA = Space Division Muliple Access), steigen auch die Anforderungen an die Trainingsfolgen.

### OFFENBARUNG DER ERFINDUNG

Der Erfindung liegt nun die Aufgabe zugrunde, Folgen mit gleich günstigen Autokorrelationseigenschaften, jedoch verbesserten Kreuzkorrelationseigenschaften zu entwickeln. Dies wird durch zwei spezielle Folgen erreicht, welche in binärer Darstellung die Form

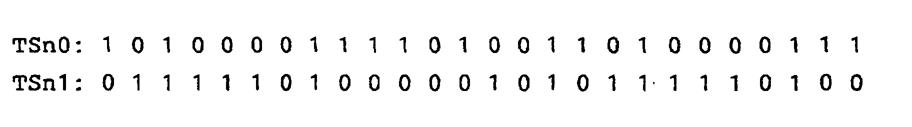

haben. Selbstverständlich können diese Folgen auch in anderen Zahlensystemen dargestellt werden.

Somit besteht die Erfindung in der Verwendung der Folgen:

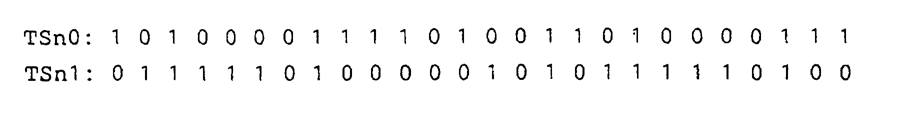

als Trainingsfolgen im zellularen Mobilfunk, insbesondere im GSM *(Global System for Mobile Communications).*

### KURZE BESCHREIBUNG DER ZEICHNUNGEN

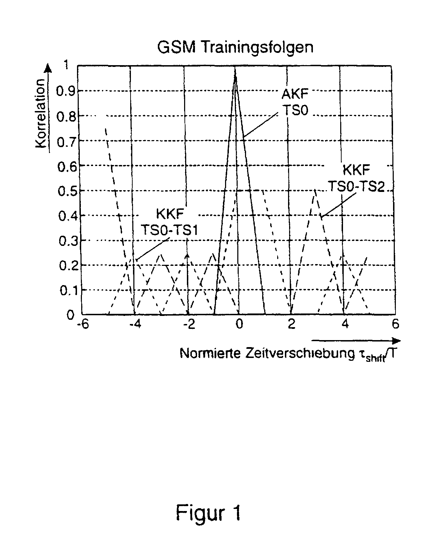

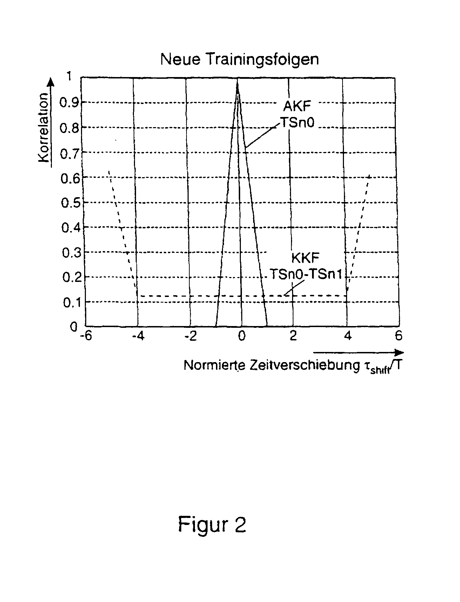

Die Erfindung wird anhand von Zeichnungen näher erläutert. Es zeigt: Fig. 1 die Auto- und Kreuzkorrelationseigenschaften der bekannten GSM-Trainingsfolgen; und Fig. 2 zeigt diese Eigenschaften der erfindungsgemäßen Trainingssequenzen.

### BESTE AUSFÜHRUNGSFORM DER ERFINDUNG

Fig. 1 zeigt die normierte Autokorrelation (AKF) der Trainingsfolge TS0 sowie die normierten Kreuzkorrelationen (KKF) der Folgen TSO-TS1 sowie TS0-TS2. τ_{shift} ist in Vielfachen der Bildauer (T) dargestellt.

Fig. 2 zeigt die Autokorrelation (AKF) der neuen Folge TSn0 sowie die Kreuzkorrelation (KKF) der Folgen TSn0-TSn1. Während in der Autokorrelationsfunktion kein Unterschied zwischen den herkömmlichen und den neuen Trainingsfolgen zu erkennen ist, ist die Kreuzkorrelation der neuen Folgen sowohl kleiner als auch gleichmäßiger verteilt. Dadurch führt die Verwendung dieser Trainingsfolgen im GSM zu höherer Zuverlässigkeit, insbesondere bei adaptiven Antennen und Raummultiplex.

## Patentansprüche

1. Verwendung der Folgen: 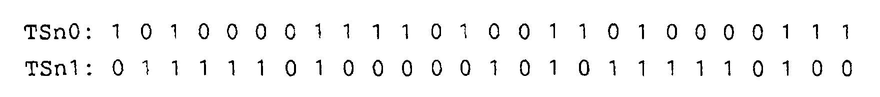 als Trainingsfolgen im zellularen Mobilfunk, insbesondere im GSM *(Global System for Mobile Communications).*

## Claims

1. Use of the sequences TSn0: 1 0 1 0 0 0 0 1 1 1 1 0 1 0 0 1 1 0 1 0 0 0 0 1 1 1, TSn1: 0 1 1 1 1 1 0 1 0 0 0 0 0 1 0 1 0 1 1 1 1 1 0 1 0 0 as training sequences in cellular mobile radiotelephony, specially GSM (Global System for Mobile Communications).

## Revendications

1. Utilisation des suites TSn0: 1 0 1 0 0 0 0 1 1 1 1 0 1 0 0 1 1 0 1 0 0 0 0 1 1 1, TSn1 : 0 1 1 1 1 1 0 1 0 0 0 0 0 1 0 1 0 1 1 1 1 1 0 1 0 0 comme suites d'entraînement dans la radiotéléphonie mobile de type cellulaire, GSM (Global System for Mobile Communications) notamment.
